# EUROPÄISCHE PATENTSCHRIFT

(11) **EP 3 459 724 B1**
(45) Veröffentlichungstag und Bekanntmachung des Hinweises auf die Patenterteilung: **19.08.2020**
(21) Anmeldenummer: 18192145.3
(22) Anmeldetag: 03.09.2018
(51) Int. Cl.: B31F 1/28, B32B 37/12

(54) **WELLPAPPE-ANLAGE**
CORRUGATED CARDBOARD ASSEMBLY
INSTALLATION DE CARTON ONDULÉ

(30) Priorität: 21.09.2017 DE 102017216717
(43) Veröffentlichungstag der Anmeldung: 27.03.2019
(73) Patentinhaber: BHS Corrugated Maschinen- und Anlagenbau GmbH, 92729 Weiherhammer (DE)
(72) Erfinder: Städele, Norbert, 92711 Parkstein (DE); Kraus, Helmut, 92442 Wackersdorf (DE); Mark, Maximilian, 95643 Tirschenreuth (DE)
(74) Vertreter: Rau, Schneck & Hübner Patentanwälte Rechtsanwälte PartGmbB

(56) Entgegenhaltungen:
- EP-A1- 2 202 081
- EP-A1- 2 792 478
- EP-A2- 2 551 117
- DE-A1- 1 924 265
- DE-A1- 3 344 941
- DE-A1-102011 076 899
- GB-A- 2 087 916
- JP-A- 2003 063 707
- US-A- 2 710 045
- US-A- 2 990 173
- US-A- 4 169 007
- US-A1- 2011 149 003
- US-A1- 2011 247 746
- US-A1- 2013 068 369

## Beschreibung

Die Erfindung betrifft eine Wellpappe-Anlage gemäß dem Oberbegriff des Anspruchs 1.

Wellpappe-Anlagen mit Druckanordnungen sind aus dem Stand der Technik durch offenkundige Vorbenutzung allgemein bekannt. Oftmals ist die Qualität der Bedruckung durch die Druckanordnungen nicht zufriedenstellend.

Aus der gattungsgemäßen DE 1 924 265 A ist eine Anordnung mit einer Helio-Druckvorrichtung und einer Vorrichtung zur Herstellung von Riffelungen bekannt. In der Helio-Druckvorrichtung wird eine Kaschierbahn bedruckt. In der Vorrichtung zur Herstellung von Riffelungen wird eine Materialbahn geriffelt, die auf eine Materialbahn unter Bildung einer einseitig kaschierten Wellpappebahn kaschiert wird. In einer Klebevorrichtung werden die einseitig kaschierte Wellpappebahn und die Kaschierbahn, die sich oberhalb der einseitig kaschierten Wellpappebahn befindet, zusammengefügt. Die Wellung der einseitig kaschierten Wellpappebahn weist dabei vor der Klebevorrichtung nach oben.

Die EP 2 551 117 A2 lehrt die Führung einer beleimten Wellbahn und einer Deckbahn zu einer Wellpappe-Maschine. Mittels Andrückwalzen wird eine laminierte Kaschierbahn mit diesen Bahnen leimend verbunden. Die Kaschierbahn ist mittels einer Druckvorrichtung bedruckbar. Die Wellbahn der einseitig kaschierten Wellpappebahn ist unmittelbar stromaufwärts zu den Andrückwalzen nach oben gerichtet. Die Kaschierbahn befindet sich bei den Andrückwalzen oberhalb der einseitig kaschierten Wellpappebahn.

Die US 4 169 007 offenbart eine Wellpappeanlage, bei der eine einseitig kaschierte Wellpappebahn mit nach oben gerichteter Wellung durch eine Trocknungs-Kühlmaschine geführt wird, wo diese mit einer Kaschierbahn leimend verbunden wird.

Aus der DE 33 44 941 A1 ist eine Wellpappeanlage bekannt, die eine einseitige Wellpappemaschine und eine über dieser angeordnete doppelseitige Wellpappemaschine umfasst. Die Wellbahn einer einseitig kaschierten Wellpappebahn ist unmittelbar stromaufwärts zu der doppelseitigen Wellpappemaschine nach oben gerichtet. Eine Kaschierbahn befindet sich in der doppelseitigen Wellpappemaschine oberhalb der einseitig kaschierten Wellpappebahn. Die Kaschierbahn kann bereits bedruckt sein.

Die EP 2 792 478 A1 offenbart eine Wellpappeanlage mit einer Vorrichtung zum Herstellen einer einseitig kaschierten Wellpappebahn. Die einseitig kaschierte Wellpappebahn wird zu einer Vorrichtung zum Herstellen einer zweiseitig kaschierten Wellpappebahn geführt. Eine Wellbahn der einseitig kaschierten Wellpappebahn ist unmittelbar stromaufwärts zu der Vorrichtung zum Herstellen einer zweiseitig kaschierten Wellpappebahn nach oben gewandt. Eine Kaschierbahn wird von oben in die Vorrichtung zum Herstellen einer zweiseitig kaschierten Wellpappebahn geführt und befindet sich dort oberhalb der einseitig kaschierten Wellpappebahn.

Der Erfindung liegt die Aufgabe zugrunde, eine Wellpappe-Anlage mit einer Druckanordnung zu schaffen, die einen vergleichsweise kleinen Platzbedarf erfordert. Ferner soll die Druckqualität bzw. Wellpappequalität besonders hoch sein.

Diese Aufgabe wird erfindungsgemäß durch die in dem unabhängigen Anspruch 1 angegebenen Merkmale gelöst.

Der Kern bei der erfindungsgemäßen Wellpappe-Anlage liegt darin, dass mittels einer Kaschierbahn-Druckanordnung die Kaschierbahn, insbesondere zeitlich und/oder örtlich, vor der Bildung einer zweiseitig kaschierten Wellpappebahn in der Vorrichtung zum Herstellen einer zweiseitig kaschierten Wellpappebahn, also vor Verbindung mit einer einseitig kaschierten Wellpappebahn, bedruckt wird. Im Betrieb bedruckt die Kaschierbahn-Druckanordnung die geförderte, insbesondere noch ungebundene, Kaschierbahn auf einer äußeren Druckseite. Die Kaschierbahn ist bzw. bleibt eine glatte, ungewellte Bahn. Die zweiseitig kaschierte Wellpappebahn ist mindestens dreilagig, vorzugsweise dreilagig, fünflagig oder siebenlagig.

Die mindestens eine einseitig kaschierte Wellpappebahn hat benachbart zu der Vorrichtung zum Herstellen einer zweiseitig kaschierten Wellpappebahn und insbesondere auch in dieser eine jeweilige nach oben gerichtete Wellung. Die Wellbahn befindet sich so dort oberhalb der zugehörigen/zugeordneten Deckbahn der jeweiligen einseitig kaschierten Wellpappebahn.

Die Vorrichtung zum Herstellen einer zweiseitig kaschierten Wellpappebahn kaschiert die Kaschierbahn von oben auf die benachbarte einseitig kaschierte Wellpappebahn auf.

Die Kaschierbahn-Druckanordnung ist vorteilhafterweise als Digital-Druckanordnung, insbesondere Inkjet-Druckanordnung, ausgebildet. Sie ist vorzugsweise nachrüstbar. Andere bekannte Druckanordnungen sind alternativ einsetzbar. Die Kaschierbahn-Druckanordnung ist insbesondere imstande, mindestens einen Buchstaben, eine Ziffer, ein anderes Zeichen, eine Grafik und/oder ein Foto auf die Kaschierbahn aufzudrucken. Dafür wird günstigerweise Farbe oder Tinte herangezogen. Es ist von Vorteil, wenn die Kaschierbahn-Druckanordnung imstande ist, mehrfarbig zu drucken.

Die Kaschierbahn-Druckanordnung weist günstigerweise mehrere in der Querrichtung in der Kaschierbahn kaskadiert angeordnete Druckköpfe auf. Vorzugsweise hat die Kaschierbahn-Druckanordnung mehrere hintereinander angeordnete Druckkopfreihen. Es ist von Vorteil, wenn die zu bedruckende Kaschierbahn in der Kaschierbahn-Druckanordnung beim Bedrucken über einen Druckzylinder bzw. Zentralzylinder geführt ist. Der Druckzylinder erstreckt sich vorzugsweise horizontal und senkrecht zu einer Förderrichtung der Kaschierbahn.

Günstigerweise gibt mindestens eine Deckbahn-Abgabevorrichtung die jeweilige Deckbahn ab. Es ist zweckmäßig, wenn die mindestens eine Deckbahn-Abgabevorrichtung als Splicevorrichtung zum Bereitstellen einer jeweiligen endlosen Deckbahn ausgebildet ist.

Vorzugsweise gibt mindestens eine Materialbahn-Abgabevorrichtung die jeweilige Materialbahn ab. Es ist von Vorteil, wenn die mindestens eine Materialbahn-Abgabevorrichtung als Splicevorrichtung zum Bereitstellen einer jeweiligen endlosen Materialbahn ausgebildet ist.

Die Kaschierbahn-Abgabevorrichtung ist bevorzugt als Splicevorrichtung zum Bereitstellen einer endlosen Kaschierbahn ausgebildet.

Günstigerweise verbindet die Vorrichtung zum Herstellen einer zweiseitig kaschierten Wellpappebahn die mindestens eine einseitig kaschierte Wellpappebahn mit der, insbesondere bedruckten, Kaschierbahn. Die Vorrichtung zum Herstellen einer zweiseitig kaschierten Wellpappebahn weist vorzugsweise mindestens einen Verpressspalt bzw. mindestens eine Verpressstrecke auf, durch den/die die mindestens eine einseitig kaschierte Wellpappebahn und die Kaschierbahn geführt sind und aneinander gepresst werden. Zwischen den Bahnen befindet sich vorzugsweise Leim zur leimenden Verbindung derselben. Der mindestens eine Verpressspalt bzw. die mindestens eine Verpressstrecke ist günstigerweise durch mindestens zwei paarweise angeordnete, insbesondere antreibbare, Verpresswalzen oder Verpressgurte gebildet bzw. begrenzt. Die Verpressgurte sind vorzugsweise endlos.

Jede Riffeleinrichtung ist günstigerweise durch zwei drehbar gelagerte Riffelwalzen gebildet. Die Riffelwalzen bilden zum Durchführen und Riffeln der jeweiligen Materialbahn unter Bildung einer Wellbahn einen Walzenspalt bzw. Riffelspalt aus.

Die Anpresseinrichtung presst günstigerweise die jeweilige Deckbahn gegen die Wellbahn, die vorzugsweise an der benachbarten Riffelwalze anliegt.

Es ist von Vorteil, wenn die Anpresseinrichtung als Anpressbandmodul ausgeführt ist. Die einseitig kaschierte Wellpappebahn verlässt vorzugsweise die jeweilige Anpresseinrichtung über einen jeweiligen Anpressausgang, der der Vorrichtung zum Herstellen einer zweiseitig kaschierten Wellpappebahn abgewandt ist. Der Anpresseingang und -Ausgang der jeweiligen Anpresseinrichtung sind günstigerweise zueinander beabstandet angeordnet.

Die mindestens eine Umlenkanordnung weist günstigerweise mindestens eine Umlenkwalze bzw. -stange auf. Die mindestens eine Umlenkwalze bzw. -stange erstreckt sich bevorzugt senkrecht zu der zugehörigen einseitig kaschierten Wellpappebahn bzw. zu deren Förderrichtung und horizontal. Die mindestens eine Umlenkanordnung ist beispielsweise Bestandteil der mindestens einen Vorrichtung zum Herstellen einer einseitig kaschierten Wellpappebahn und/oder einer Brücke. Alternativ ist diese separat ausgeführt und beispielsweise zwischen der mindestens einen Vorrichtung zum Herstellen einer einseitig kaschierten Wellpappebahn und der Brücke angeordnet.

Die hier verwendeten Ausdrücke "vorgeordnet", "nachgeordnet", "stromaufwärts", "stromabwärts", "hintereinander" oder dergleichen beziehen sich insbesondere auf die Förderrichtung der jeweiligen geförderten Bahn.

Ein nicht erfindungsgemäßes Verfahren zum Herstellen von Wellpappe umfasst vorzugsweise den Schritt
- Auftragen von Leim mittels eines Leimwerks auf freie Spitzen von mindestens einer einseitig kaschierten Wellpappebahn zur leimenden Verbindung derselben mit einer weiteren Bahn zur Bildung einer zweiseitig kaschierten Wellpappebahn, wobei der Leim Verarbeitungstemperaturen von unter 70 °C erlaubt, die günstigerweise zumindest an der mindestens einen einseitig kaschierten Wellpappebahn und/oder der Kaschierbahn vorliegen.

Die Verarbeitungstemperaturen des Leims von unter 70 °C führen dazu, dass besonders wenig Energie zur Herstellung der Wellpappe benötigt wird. Ferner werden die zu beleimenden bzw. miteinander zu verbindenden Bahnen geschont. Der Leim hat eine vergleichsweise niedrige Abbindetemperatur bzw. Aushärtetemperatur.

Weitere vorteilhafte Ausgestaltungen der Erfindung sind in den Unteransprüchen angegeben.

Die mindestens eine Leimauftragseinrichtung gemäß dem Unteranspruch 2 hat vorzugsweise jeweils eine Leimdosierwalze, einen Leimbehälter und eine Leimauftragswalze. Zum Durchführen und Beleimen der jeweiligen Wellbahn bildet die entsprechende Leimauftragswalze mit einer Riffelwalze vorzugsweise einen Leimspalt auf. Der sich in dem Leimbehälter befindende Leim wird günstigerweise über die Leimauftragswalze auf Spitzen der Wellung der Wellbahn aufgetragen. Die Leimdosierwalze liegt vorzugsweise gegen die benachbarte Leimauftragswalze an und dient zum Ausbilden einer gleichmäßigen Leimschicht auf der Leimauftragswalze. Das Leimwerk gemäß dem Unteranspruch 3 trägt günstigerweise Leim von oben auf Spitzen der Wellung der mindestens einen einseitig kaschierten Wellpappebahn auf. Günstigerweise wird dieses Auftragen durch Schwerkraft unterstützt.

Der in dem Leimwerk eingesetzte Leim erlaubt bevorzugt Verarbeitungstemperaturen von unter 70° C. Dieses Leimwerk hat einen besonders niedrigen Energiebedarf. Wellpappe ist so äußerst wirtschaftlich herstellbar. Ferner wird so bevorzugt besonders wenig Feuchtigkeit in die mindestens eine einseitig kaschierte Wellpappebahn eingebracht, was eine plane Oberseite ergibt und eine äußerst kurze Vorrichtung zum Herstellen einer zweiseitig kaschierten Wellpappebahn erlaubt.

Der Leim hat eine vergleichsweise niedrige Abbindetemperatur bzw. Aushärtetemperatur.

Insbesondere erfolgt eine Abbindung bzw. Aushärtung des Leims beim Auftragen desselben auf die mindestens eine einseitig kaschierte Wellpappebahn bzw. unmittelbar danach, deren Leim-Aufnahmegebiet vorzugsweise eine Temperatur aufweist, die zur Abbindung, Aushärtung bzw. Trocknung des Leims ausreichend ist. Bereiche des Leims bzw. von Leimlinien erfahren dabei sowohl beim Leimauftrag als auch danach günstigerweise Temperaturen von unter 70 °C. Die Verarbeitungstemperaturen des Leims liegen günstigerweise an der mindestens einen einseitig kaschierten Wellpappebahn vor.

Die mindestens eine Beleimungswalze gemäß dem Unteranspruch 4 ist günstigerweise oberhalb der jeweiligen zu beleimenden einseitig kaschierten Wellpappebahn angeordnet. Es ist zweckmäßig, wenn das Leimwerk ferner mindestens ein Leimbad aufweist, in das die mindestens eine Beleimungswalze eingetaucht ist bzw. diese mit Leim versorgt. Günstigerweise hat das Leimwerk mindestens eine Dosierwalze, die an der mindestens einen Beleimungswalze zum Ausbilden eines gleichmäßigen Leimfilms auf der Beleimungswalze umfangsseitig anliegt. Eine Befüllung des Leimbads erfolgt vorzugsweise von oben.

Das Leimwerk ist günstigerweise der Kaschierbahn-Druckanordnung nachgeordnet und, insbesondere unmittelbar, benachbart zu der Kaschierbahn-Druckanordnung angeordnet, insbesondere derart, dass die Kaschierbahn-Druckanordnung die Kaschierbahn derart erwärmt, dass der durch das Leimwerk aufgebrachte Leim abbindet.

Es ist von Vorteil, wenn die Kaschierbahn-Druckanordnung benachbart zu dem Leimwerk angeordnet ist. Eine separate Vorheizanordnung zum Vorheizen der mindestens einen einseitig kaschierten Wellpappebahn und/oder der Kaschierbahn, insbesondere unmittelbar stromaufwärts zu der Vorrichtung zum Herstellen einer zweiseitig kaschierten Wellpappebahn bzw. zu dem Leimwerk, ist so hinfällig. Dies ist insbesondere darauf zurückzuführen, dass zwischen der Bedruckung durch die mindestens eine Kaschierbahn-Druckvorrichtung und der Vorrichtung zum Herstellen einer zweiseitig kaschierten Wellpappebahn eine besonders kurze Strecke vorliegt. Günstigerweise ist ein Abstand zwischen der Kaschierbahn-Druckanordnung bzw. der mindestens einen Kaschierbahn-Druckvorrichtung der Kaschierbahn-Druckanordnung und dem Leimwerk kleiner als 5 m. Die Kaschierbahn-Druckanordnung hat beispielsweise mindestens ein eigenes Heizelement zum Erwärmen der Kaschierbahn. Beispielsweise erfolgt eine entsprechende Erwärmung der Kaschierbahn durch mindestens eine der Kaschierbahn zugeordnete Bedruckungs-Trocknungsvorrichtung der Kaschierbahn-Druckanordnung.

Die Kaschierbahn-Druckanordnung erwärmt vorzugsweise die Kaschierbahn derart, dass diese in der Vorrichtung zum Herstellen einer zweiseitig kaschierten Wellpappebahn mit der benachbarten einseitig kaschierten Wellpappebahn leimend verbindbar ist. Diese Wellpappe-Anlage hat wieder einen besonders niedrigen Energiebedarf. Wellpappe ist so äußerst wirtschaftlich herstellbar. Günstigerweise erwärmt die Kaschierbahn-Druckanordnung die Kaschierbahn beim Bedrucken derselben bzw. bei einer Drucktrocknung zumindest bereichsweise auf maximal 120 °C, bevorzugter auf 50 °C bis 70 °C.

Die Wellpappe-Anlage gemäß dem Unteranspruch 5 hat zumindest bei der Kaschierbahn-Druckanordnung eine besonders niedrige Höhe. Es ist von Vorteil, wenn die Führungsanordnung benachbart zu einem die Wellpappe-Anlage tragenden Boden verläuft. Die Führungsanordnung ist beispielsweise oberhalb des Bodens oder in dem Boden angeordnet, was zu einer oberirdischen bzw. unterirdischen Führung der mindestens einen einseitig kaschierten Wellpappebahn führt. Die mindestens eine einseitig kaschierte Wellpappebahn passiert vorzugsweise die Kaschierbahn-Druckanordnung in der Führungsanordnung. Es ist zweckmäßig, wenn die Führungsanordnung mindestens eine Leitwalze und/oder ein Leitband zur Führung der mindestens einen einseitig kaschierten Wellpappebahn umfasst.

Die mindestens eine Kaschierbahn-Druckvorrichtung weist günstigerweise einen Zentralzylinder und einen Druckriegel auf, der unter Bildung eines Druckspalts zur Hindurchführung der Kaschierbahn benachbart zu dem Zentralzylinder angeordnet ist. Diese mindestens eine Kaschierbahn-Druckvorrichtung ermöglicht eine äußerst hohe Druckqualität. Außerdem ist so eine äußerst wirtschaftliche Bedruckung möglich.

Die Wellpappe-Anlage umfasst bevorzugt eine der Vorrichtung zum Herstellen einer zweiseitig kaschierten Wellpappebahn vorgeordnete Ausrichtanordnung zum Ausrichten der mindestens einen kaschierten Wellpappebahn und der Kaschierbahn nacheinander.

Diese Wellpappe-Anlage hat wieder eine besonders hohe Wellpappequalität zufolge. Insbesondere ist so eine besonders gute Anpassung bzw. Angleichung der mindestens einen einseitig kaschierten Wellpappebahn und der Kaschierbahn nacheinander möglich. Insbesondere ist die mindestens eine einseitig kaschierte Wellpappebahn und/oder die Kaschierbahn seitlich auslenkbar. Die Ausrichtanordnung hat dazu vorzugsweise mindestens eine verlagerbare Ausrichtrolle bzw. -walze, um die die mindestens eine auszurichtende Bahn geführt ist. Es ist zweckmäßig, wenn die Ausrichtanordnung mindestens einen verdrehbaren bzw. verschwenkbaren Drehrahmen, insbesondere mit mindestens zwei Bahn-Führungswalzen, und/oder mindestens eine Kamberrolle/Schwenkwalze zum Ausrichten der Kaschierbahn und/oder der mindestens einen einseitig kaschierten Wellpappebahn umfasst. Die mindestens eine Kamberrolle/Schwenkwalze schwenkt sich dabei vorzugsweise in einer horizontalen Ebene und günstigerweise um ihren, insbesondere axialen, Mittelpunkt. Beispielsweise liegt ein Schwerpunkt stromaufwärts in einer Trocknungsvorrichtung.

Die Ausgestaltung gemäß dem Unteranspruch 6 ermöglicht eine äußerst kurze Transportstrecke der Kaschierbahn zwischen der Kaschierbahn-Abgabevorrichtung und der Kaschierbahn-Druckanordnung.

Günstigerweise bildet gemäß dem Unteranspruch 7 die Kaschierbahn-Abgabevorrichtung den Anfang der Wellpappe-Anlage. Es ist von Vorteil, wenn eine Bedruckung auf Brückenniveau erfolgt.

Die Vorrichtung zum Herstellen einer zweiseitig kaschierten Wellpappenbahn hat vorzugsweise eine Länge, die kleiner als 15 m ist.

Nachfolgend werden unter Bezugnahme auf die beigefügte Zeichnung zwei bevorzugte Ausführungsformen der Erfindung beispielhaft beschrieben. Dabei zeigen:
- Fig. 1: eine schematische Seitenansicht einer erfindungsgemäßen Wellpappe-Anlage,

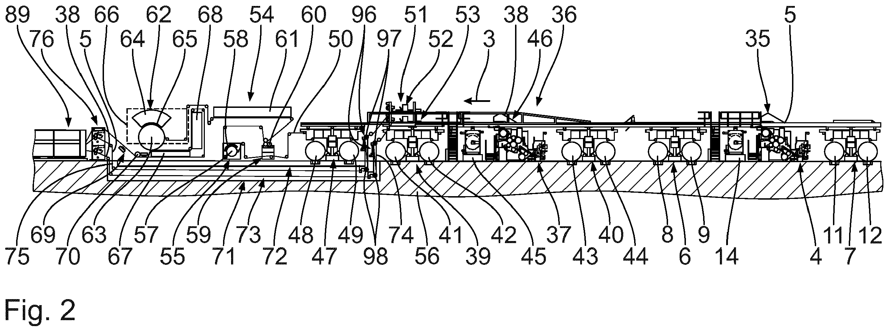

- Fig. 2: einen vergrößerten Ausschnitt aus Fig. 1, der die Vorrichtung zum Herstellen einer zweiseitig kaschierten Wellpappebahn und den dieser vorgeordneten Teil der Wellpappe-Anlage gemäß Fig. 1 veranschaulicht,
- Fig. 3: eine Seitenansicht einer Vorrichtung zum Herstellen einer einseitig kaschierten Wellpappebahn der in Fig. 1, 2 gezeigten Wellpappe-Anlage,
- Fig. 3a: einen vergrößerten Ausschnitt, der die Orientierung der einseitig kaschierten Wellpappebahn nach deren Bildung nach der Anpresseinrichtung zeigt,

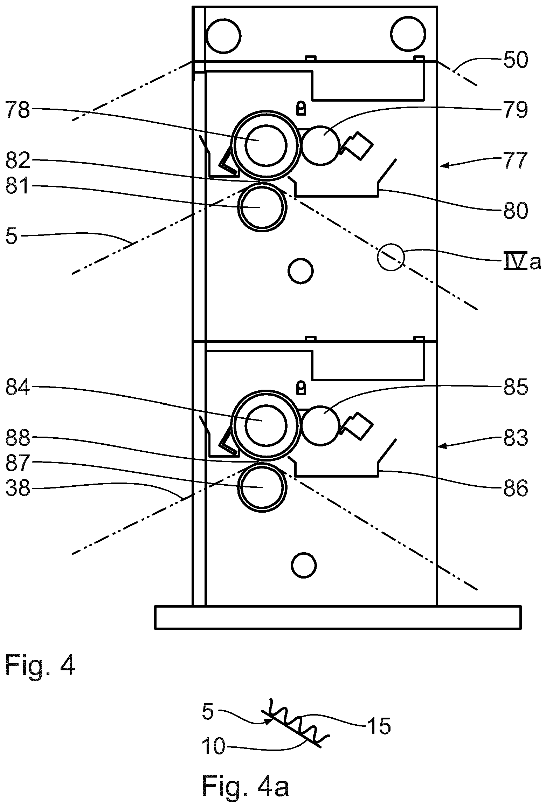

- Fig. 4: eine Seitenansicht eines Leimwerks der in Fig. 1, 2 gezeigten Wellpappe-Anlage,
- Fig. 4a: einen vergrößerten Ausschnitt, der die Orientierung einer einseitig kaschierten Wellpappebahn benachbart stromaufwärts zu dem Leimwerk zeigt,
- Fig. 5: eine Seitenansicht einer erfindungsgemäßen Wellpappe-Anlage gemäß einer zweiten Ausführungsform,
- Fig. 6: einen vergrößerten Ausschnitt aus Fig. 5, der die Vorrichtung zum Herstellen einer zweiseitig kaschierten Wellpappebahn und den vorgeordneten Teil der Wellpappe-Anlage zeigt,

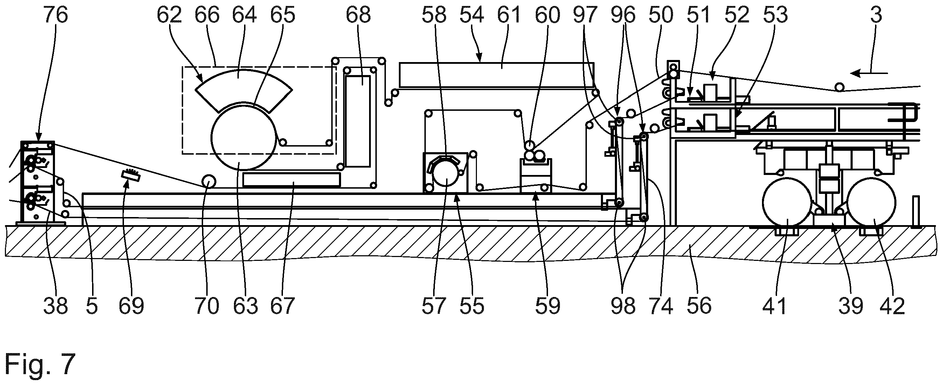

- Fig. 7: einen vergrößerten Ausschnitt aus Fig. 5, und

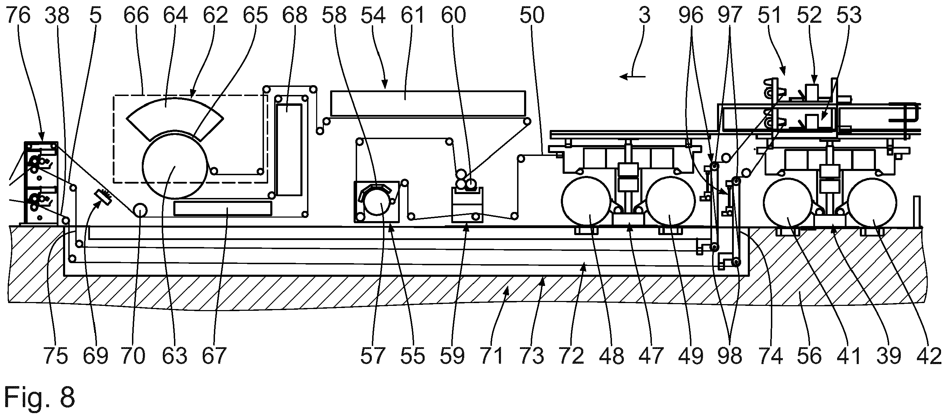

- Fig. 8: einen vergrößerten Ausschnitt aus Fig. 1.

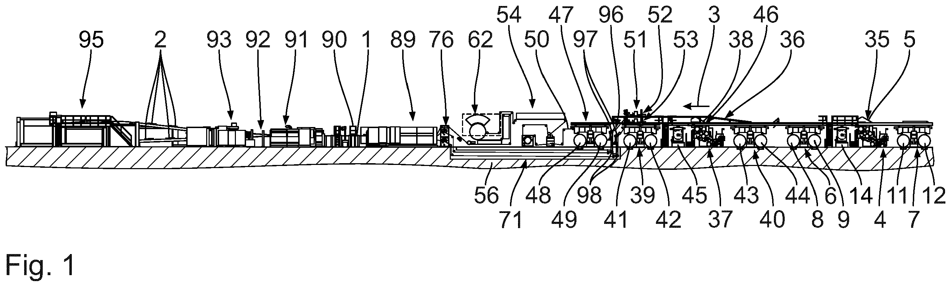

Eine in Fig. 1 in ihrer Gesamtheit gezeigte Wellpappe-Anlage ist imstande, eine endlose fünflagige Wellpappebahn 1 bzw. fünflagige Wellpappebögen 2 herzustellen. Die Wellpappe-Anlage ist länglich ausgeführt. Sie erstreckt sich im Wesentlichen von einem Anfang (in Fig. 1 rechts) gerade in einer Längsrichtung bzw. Förderrichtung 3.

Die Wellpappe-Anlage umfasst eine erste Vorrichtung 4 zum Herstellen einer einseitig kaschierten ersten Wellpappebahn 5.

Der ersten Vorrichtung 4 zum Herstellen einer einseitig kaschierten ersten Wellpappebahn 5 sind eine erste Deckbahn-Splicevorrichtung 6 und eine erste Materialbahn-Splicevorrichtung 7 vorgeordnet.

Die erste Deckbahn-Splicevorrichtung 6 umfasst zum Abrollen einer endlichen ersten Deckbahn von einer ersten Deckbahnrolle 8 eine erste Abrolleinheit und zum Abrollen einer endlichen Deckbahn von einer zweiten Deckbahnrolle 9 eine zweite Abrolleinheit. Die endliche erste Deckbahn und die endliche zweite Deckbahn werden zum Bereitstellen einer endlosen ersten Deckbahn 10 in der ersten Deckbahn-Splicevorrichtung 6 miteinander verbunden.

Die erste Materialbahn-Splicevorrichtung 7, die einen Anfang der Wellpappe-Anlage bildet, ist entsprechend der ersten Deckbahn-Splicevorrichtung 6 ausgebildet. Diese umfasst zum Abrollen einer endlichen ersten Materialbahn von einer ersten Materialbahnrolle 11 eine dritte Abrolleinheit und zum Abrollen einer endlichen zweiten Materialbahn von einer zweiten Materialbahnrolle 12 eine vierte Abrolleinheit. Die endliche erste Materialbahn und die endliche zweite Materialbahn werden zum Bereitstellen einer endlosen ersten Materialbahn 13 in der ersten Materialbahn-Splicevorrichtung 7 miteinander verbunden.

Die endlose erste Deckbahn 10 wird über eine erste Heizanordnung 14 der ersten Vorrichtung 4 zum Herstellen einer einseitig kaschierten ersten Wellpappebahn 5 zugeführt, während die endlose erste Materialbahn 13 über eine erste Umlenkanordnung 14a der ersten Vorrichtung 4 zum Herstellen einer einseitig kaschierten ersten Wellpappebahn 5 zugeführt wird.

Die erste Vorrichtung 4 zum Herstellen einer einseitig kaschierten ersten Wellpappebahn 5 umfasst zum Erzeugen einer eine Wellung aufweisenden endlosen ersten Wellbahn 15 aus der endlosen ersten Materialbahn 13 eine drehbar gelagerte erste Riffelwalze 16 und eine drehbar gelagerte zweite Riffelwalze 17. Die Riffelwalzen 16, 17 bilden zum Durchführen und Riffeln der endlosen ersten Materialbahn 13 einen ersten Walzenspalt 18 aus. Sie bilden zusammen eine erste Riffeleinrichtung.

Zum Verbinden der endlosen ersten Wellbahn 15 mit der endlosen ersten Deckbahn 10 zu der einseitig kaschierten ersten Wellpappebahn 5 weist die erste Vorrichtung 4 zum Herstellen einer einseitig kaschierten ersten Wellpappebahn 5 eine erste Leimauftragseinrichtung 19 auf, die eine erste Leimdosierwalze 20, einen ersten Leimbehälter 21 und eine erste Leimauftragswalze 22 umfasst. Die erste Leimauftragseinrichtung 19 ist an einer dem Anfang der Wellpappe-Anlage abgewandten Seite der ersten Riffeleinrichtung angeordnet. Zum Durchführen und Beleimen der endlosen ersten Wellbahn 15 bildet die erste Leimauftragswalze 22 mit der ersten Riffelwalze 16 einen ersten Leimspalt 23 aus. Der sich in dem ersten Leimbehälter 21 befindende Leim wird über die erste Leimauftragswalze 22 auf Spitzen der Wellung der endlosen ersten Wellbahn 15 aufgetragen. Die erste Leimdosierwalze 20 liegt gegen die erste Leimauftragswalze 22 an und dient zum Ausbilden einer gleichmäßigen Leimschicht auf der ersten Leimauftragswalze 22.

Die endlose erste Deckbahn 10 wird anschließend mit der mit Leim aus dem ersten Leimbehälter 21 versehenen endlosen ersten Wellbahn 15 in der ersten Vorrichtung 4 zum Herstellen einer einseitig kaschierten ersten Wellpappebahn 5 zusammengefügt.

Zum Anpressen der endlosen ersten Deckbahn 10 gegen die mit Leim versehene endlose erste Wellbahn 15, die wiederum bereichsweise an der ersten Riffelwalze 16 anliegt, hat die erste Vorrichtung 4 zum Herstellen einer einseitig kaschierten ersten Wellpappebahn 5 ein erstes Anpressmodul 24. Das erste Anpressmodul 24 ist günstigerweise als Anpressbandmodul ausgeführt. Es ist oberhalb der ersten Riffelwalze 16 angeordnet. Das erste Anpressmodul 24 hat zwei erste Umlenkwalzen 25 und ein endloses erstes Anpressband 26, das um die beiden ersten Umlenkwalzen 25 geführt ist.

Die erste Riffelwalze 16 greift in einen zwischen den beiden ersten Umlenkwalzen 25 vorliegenden Raum bereichsweise von unten ein, wodurch das erste Anpressband 26 durch die erste Riffelwalze 16 umgelenkt wird. Das erste Anpressband 26 drückt gegen die endlose erste Deckbahn 10, die wiederum gegen die mit Leim versehene, an der ersten Riffelwalze 16 anliegende endlose erste Wellbahn 15 gepresst wird.

Die erste Vorrichtung 4 zum Herstellen einer einseitig kaschierten ersten Wellpappebahn 5 umfasst außerdem eine erste Bahnspannungs-Beeinflussungseinrichtung 27, die dem ersten Anpressmodul 24 vorgeordnet und der endlosen ersten Deckbahn 10 zugeordnet ist. Mit der ersten Bahnspannungs-Beeinflussungseinrichtung 27 ist so die Spannung der endlosen ersten Deckbahn 10 beeinflussbar.

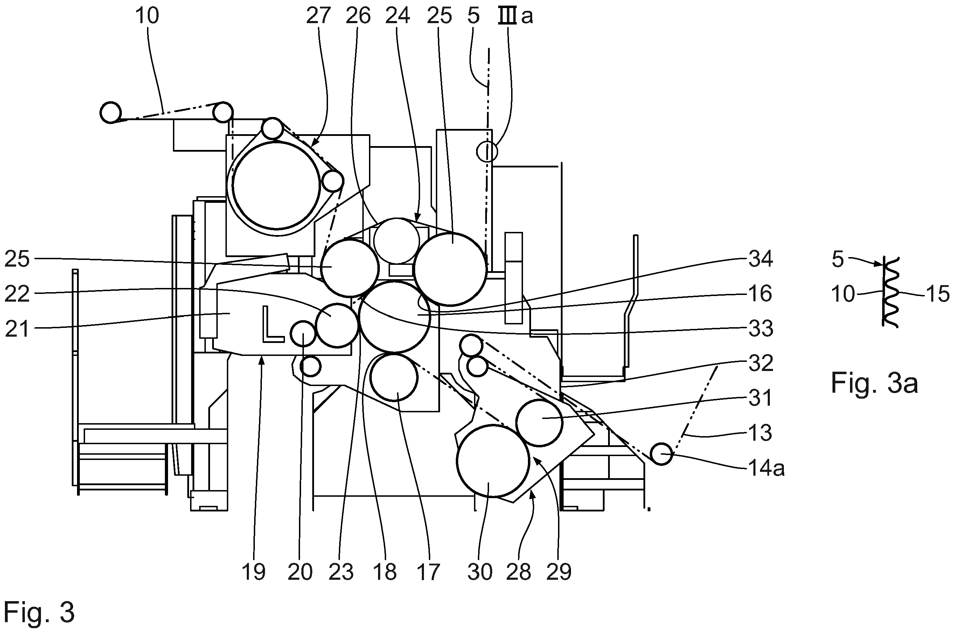

Die erste Vorrichtung 4 zum Herstellen einer einseitig kaschierten ersten Wellpappebahn 5 umfasst außerdem eine erste Riffeleinrichtungs-Wechseleinrichtung 28, die eine bislang inaktive zweite Riffeleinrichtung 29 für einen Wechsel bevorratet. Die erste Riffeleinrichtungs-Wechseleinrichtung 29 ist der ersten Riffeleinrichtung in Bezug auf die endlose erste Materialbahn 13 vorgeordnet. Sie umfasst eine dritte Riffelwalze 30 und eine vierte Riffelwalze 31 zum Riffeln der endlosen ersten Materialbahn 13. Im Vergleich mit der ersten Riffeleinrichtung hat die zweite Riffeleinrichtung 29 eine andere Riffelung. Die erste Riffeleinrichtungs-Wechseleinrichtung 28 ist zwischen einer inaktiven Parkstellung (siehe Fig. 3) und einer aktiven Riffelstellung verschwenkbar. Günstigerweise ist die endlose erste Materialbahn 13 nur durch die gerade aktive Riffeleinrichtung geführt und an der inaktiven Riffeleinrichtung vorbeigeführt. Alternativ ist diese sowohl durch die inaktive Riffeleinrichtung als auch durch die aktive Riffeleinrichtung geführt.

Die endlose erste Materialbahn 13 wird über einen ersten Materialbahneingang 32 in die erste Vorrichtung 4 zum Herstellen einer einseitig kaschierten ersten Wellpappebahn 5 eingeführt. Der erste Materialbahneingang 32 ist der ersten Materialbahn-Splicevorrichtung 7 und somit dem Anfang der Wellpappe-Anlage zugewandt. Die erste Leimauftragseinrichtung 19 ist an einer dem ersten Materialbahneingang 32 abgewandten Seite der ersten Riffeleinrichtung angeordnet.

Die endlose erste Deckbahn 10 und die endlose Kaschierbahn 50 treten an einer dem ersten Materialbahneingang 32 abgewandten bzw. dem Anfang der Wellpappe-Anlage abgewandten Seite in das erste Anpressmodul 24 bzw. in dessen Anpressspalt ein und verlassen dieses an einer dem ersten Materialbahneingang 32 bzw. dem Anfang der Wellpappe-Anlage zugewandten Seite. Dazu hat das erste Anpressmodul 24 einen ersten Anpresseingang 33 und einen beabstandet zu diesem angeordneten ersten Anpressausgang 34. Der erste Anpressausgang 34 ist der ersten Leimauftragseinrichtung 19 abgewandt. Der erste Anpresseingang 33 ist benachbart zu der ersten Leimauftragseinrichtung 19 angeordnet.

Zum weiteren Fördern der einseitig kaschierten ersten Wellpappebahn 5 wird diese über eine erste Hochtransporteinrichtung 35 einer Brücke 36 der Wellpappe-Anlage zugeführt. Zwischen dem ersten Anpressmodul 24 und der Brücke 36 ist die endlose erste Wellbahn 15 der einseitig kaschierten ersten Wellpappebahn 5 dem Anfang der Wellpappe-Anlage zugewandt.

Auf der Brücke 36 ist die endlose erste Wellbahn 15 der einseitig kaschierten ersten Wellpappebahn 5 nach oben gewandt. Umgekehrt ist die endlose erste Deckbahn 10 der einseitig kaschierten ersten Wellpappebahn 5 nach unten gewandt. Die einseitig kaschierte erste Wellpappebahn 5 ist auf der Brücke 36 bzw. der ersten Hochtransporteinrichtung 35 entsprechend umgelenkt worden. Die Brücke 36 kann auch zum Zwischenspeichern und Puffern der einseitig kaschierten ersten Wellpappebahn 5 dienen.

Die Wellpappe-Anlage umfasst außerdem eine zweite Vorrichtung 37 zum Herstellen einer einseitig kaschierten zweiten Wellpappebahn 38.

Der zweiten Vorrichtung 37 zum Herstellen einer einseitig kaschierten zweiten Wellpappebahn 38 sind eine zweite Deckbahn-Splicevorrichtung 39 und eine zweite Materialbahn-Splicevorrichtung 40 vorgeordnet.

Die zweite Deckbahn-Splicevorrichtung 39 ist wie die erste Deckbahn-Splicevorrichtung 6 ausgebildet. Diese umfasst zum Abrollen einer endlichen dritten Deckbahn von einer dritten Deckbahnrolle 41 eine fünfte Abrolleinheit und zum Abrollen einer endlichen vierten Deckbahn von einer vierten Deckbahnrolle 42 eine sechste Abrolleinheit. Die endliche dritte Deckbahn und vierte Deckbahn werden zum Bereitstellen einer endlosen zweiten Deckbahn in der zweiten Deckbahn-Splicevorrichtung 39 miteinander verbunden.

Die zweite Materialbahn-Splicevorrichtung 40 ist wie die erste Materialbahn-Splicevorrichtung 7 ausgebildet. Diese umfasst zum Abrollen einer endlichen dritten Materialbahn von einer dritten Materialbahnrolle 43 eine siebte Abrolleinheit und zum Abrollen einer endlichen vierten Materialbahn von einer vierten Materialbahnrolle 44 eine achte Abrolleinheit. Die endliche dritte Materialbahn und endliche vierte Materialbahn werden zum Bereitstellen einer endlosen zweiten Materialbahn in der zweiten Materialbahn-Splicevorrichtung 40 miteinander verbunden.

Die endlose zweite Deckbahn wird über eine zweite Heizanordnung 45 der zweiten Vorrichtung 37 zum Herstellen einer einseitig kaschierten zweiten Wellpappebahn 38 zugeführt, während die endlose zweite Materialbahn über eine zweite Umlenkanordnung der zweiten Vorrichtung 37 zum Herstellen einer einseitig kaschierten zweiten Wellpappebahn 38 zugeführt wird.

Die zweite Vorrichtung 37 zum Herstellen einer einseitig kaschierten zweiten Wellpappebahn 38 ist entsprechend der ersten Vorrichtung 4 zum Herstellen einer einseitig kaschierten ersten Wellpappebahn 5 ausgebildet. Sie ist auch analog orientiert. Auf die vorherige Beschreibung wird verwiesen. Ein zweiter Anpressausgang der zweiten Vorrichtung 37 zum Herstellen einer einseitig kaschierten zweiten Wellpappebahn 38 ist somit in Richtung auf den ersten Anpresseingang 33 der ersten Vorrichtung 4 zum Herstellen einer einseitig kaschierten ersten Wellpappebahn 5 gewandt und somit dem Anfang der Wellpappe-Anlage zugewandt.

Zum weiteren Fördern der einseitig kaschierten zweiten Wellpappebahn 38 wird diese über eine zweite Hochtransporteinrichtung 46 der Brücke 36 zugeführt. Auf der Brücke 36 ist eine endlose zweite Wellbahn der einseitig kaschierten zweiten Wellpappebahn 38 nach oben gewandt. Umgekehrt ist eine endlose zweite Deckbahn der einseitig kaschierten zweiten Wellpappebahn nach unten gewandt. Die einseitig kaschierte zweite Wellpappebahn 38 ist auf der Brücke 36 bzw. der zweiten Hochtransporteinrichtung 46 entsprechend umgelenkt worden. Sie wird auf der Brücke 36 unterhalb der einseitig kaschierten ersten Wellpappebahn 5 geführt. Die Brücke 36 kann auch zum Zwischenspeichern und Puffern der einseitig kaschierten zweiten Wellpappebahn 38 dienen.

Ferner hat die Wellpappe-Anlage eine Kaschierbahn-Splicevorrichtung 47, die wie übrigen Splicevorrichtungen 6, 7, 39, 40 ausgebildet ist. Die Kaschierbahn-Splicevorrichtung 47 ist benachbart zu der zweiten Deckbahn-Splicevorrichtung 39 angeordnet und umfasst zum Abrollen einer endlichen ersten Kaschierbahn von einer ersten Kaschierbahnrolle 48 eine neunte Abrolleinheit und zum Abrollen einer endlichen zweiten Kaschierbahn von einer zweiten Kaschierbahnrolle 49 eine zehnte Abrolleinheit. Die endliche erste Kaschierbahn und die endliche zweite Kaschierbahn werden zum Bereitstellen einer endlosen Kaschierbahn 50 in der Kaschierbahn-Splicevorrichtung 47 miteinander verbunden. Die endlose Kaschierbahn 50 ist einlagig.

An der Brücke 36 ist in einem stromabwärtigen Endbereich eine Bremsanordnung 51 angeordnet, die eine der einseitig kaschierten ersten Wellpappebahn 5 zugeordnete erste Bremsvorrichtung 52 und eine der einseitig kaschierten zweiten Wellpappebahn 38 zugeordnete zweite Bremsvorrichtung 53 umfasst. Die erste Bremsvorrichtung 52 ist imstande, auf die einseitig kaschierte erste Wellpappebahn 5 bremsend einzuwirken. Die zweite Bremsvorrichtung 53 ist imstande, auf die einseitig kaschierte zweite Wellpappebahn 38 bremsend einzuwirken. Eine Anpassung der einseitig kaschierten Wellpappebahnen 5, 38 an die endlose Kaschierbahn 50 ist so möglich. Die Bremsanordnung 51 ist oberhalb der Kaschierbahn-Splicevorrichtung 47 angeordnet.

Stromabwärts in Bezug auf die endlose Kaschierbahn 50 ist zu der Kaschierbahn-Splicevorrichtung 47 eine Kaschierbahn-Druckanordnung 54 angeordnet.

Die Kaschierbahn-Druckanordnung 54 umfasst eine Corona-Vorbehandlungsvorrichtung 55, die auf einem Boden bzw. Untergrund 56 steht. Die Corona-Vorbehandlungsvorrichtung 55 umfasst eine Corona-Trägerwalze 57 und mindestens eine benachbart zu dieser angeordnete Elektrode 58. Die Corona-Trägerwalze 57 erstreckt sich horizontal und senkrecht zu der Förderrichtung 3 der endlosen Kaschierbahn 50. Um die Corona-Trägerwalze 57 ist die endlose Kaschierbahn 50 geführt. Die endlose Kaschierbahn 50 läuft dabei durch einen Spalt, der durch die Corona-Trägerwalze 57 und die mindestens eine Elektrode 58 gebildet bzw. begrenzt ist. Durch die Corona-Vorbehandlungsvorrichtung 55 wird die endlose Kaschierbahn 50 einer elektrischen Corona-Entladung ausgesetzt, was zu einer Oxidation deren Oberfläche, insbesondere an der Druckseite, führt. Dies ergibt höhere Punktzuwächse bei einem späteren Farbauftrag bzw. Bedrucken. Die Haftung einer Druckfarbe auf der endlosen Kaschierbahn 50 ist so verbesserbar.

Die Kaschierbahn-Druckanordnung 54 hat außerdem eine Vorbeschichtungs-Auftragsvorrichtung 59, die in Bezug auf die endlose Kaschierbahn 50 der Corona-Vorbehandlungsvorrichtung 55 nachgeordnet ist und auf dem Boden 56 steht. Die Vorbeschichtungs-Auftragsvorrichtung 59 ist der endlosen Kaschierbahn 50 zugeordnet und ist imstande, auf eine Außenseite bzw. Druckseite der endlosen Kaschierbahn 50 eine flächige Vorbeschichtung aufzubringen. Die Vorbeschichtungs-Auftragsvorrichtung 59 nutzt dazu günstigerweise mindestens eine Vorbeschichtungswalze 60, die sich horizontal und senkrecht zu der Förderrichtung 3 der endlosen Kaschierbahn 50 erstreckt. Die mindestens eine Vorbeschichtungswalze 60 ist vorzugsweise in ein auftragbares Vorbeschichtungsmittel eingetaucht bzw. wird mit einem solchen versorgt.

Die Kaschierbahn-Druckanordnung 54 weist ferner eine Vorbeschichtungs-Trocknungsvorrichtung 61 auf, die in Bezug auf die endlose Kaschierbahn 50 der Vorbeschichtungs-Auftragsvorrichtung 59 nachgeordnet ist und außenseitig die Vorbeschichtung bzw. die endlose Kaschierbahn 50 trocknet. Die Vorbeschichtungs-Trocknungsvorrichtung 61 verläuft horizontal. Sie ist oberhalb der Corona-Vorbehandlungsvorrichtung 55 und der Vorbeschichtungs-Auftragsvorrichtung 59 angeordnet.

Die Corona-Vorbehandlungsvorrichtung 55, die Vorbeschichtungs-Auftragsvorrichtung 59 und die Vorbeschichtungs-Trocknungsvorrichtung 61 bilden eine Druck-Vorbereitungsanordnung der Kaschierbahn-Druckanordnung 54.

Die Kaschierbahn-Druckanordnung 54 umfasst ferner eine Inkjet-Druckvorrichtung 62, die in Bezug auf die endlose Kaschierbahn 50 der Vorbeschichtungs-Trocknungsvorrichtung 61 nachgeordnet ist. Die Inkjet-Druckvorrichtung 62 ist der endlosen Kaschierbahn 50 zugeordnet und ist imstande, außenseitig auf die endlose Kaschierbahn 50 bzw. auf die getrocknete Vorbeschichtung mindestens einen Aufdruck aufzudrucken. Die Vorbeschichtung befindet sich somit zwischen dem mindestens einen Aufdruck und der endlosen Kaschierbahn 50. Der mindestens eine Aufdruck ist günstigerweise ein Farbaufdruck. Er befindet sich auf der Druckseite der endlosen Kaschierbahn 50.

Die Inkjet-Druckvorrichtung 62 umfasst einen Zentralzylinder 63, der sich senkrecht zu der Förderrichtung 3 der endlosen Kaschierbahn 50 und horizontal erstreckt. Ferner hat die Inkjet-Druckvorrichtung 62 einen Druccköpfe aufweisenden Inkjet-Druckriegel 64, der sich bereichsweise um den Zentralzylinder 63 beabstandet unter Bildung eines Druckspalts 65 erstreckt. Die endlose Kaschierbahn 50 ist zur außenseitigen Bedruckung durch den Druckspalt 65 geführt. Die Inkjet-Druckvorrichtung 62 ist zumindest größtenteils in einer gehäuseartigen Wärmeschutzanordnung 66 angeordnet. Beim Bedrucken erwärmt sie die endlose Kaschierbahn 50.

Die Kaschierbahn-Druckanordnung 54 hat außerdem eine Infrarot-Trocknungsvorrichtung 67, die in Bezug auf die endlose Kaschierbahn 50 der Inkjet-Druckvorrichtung 62 nachgeordnet und der endlosen Kaschierbahn 50 zugeordnet ist. Die Infrarot-Trocknungsvorrichtung 67 erstreckt sich horizontal und trocknet die bedruckte endlose Kaschierbahn 50 bzw. deren mindestens einen Aufdruck mittels Infrarotstrahlung. Die Infrarot-Trocknungsvorrichtung 67 ist unterhalb der Inkjet-Druckvorrichtung 62 bzw. der Wärmeschutzanordnung 66 und benachbart zu dieser angeordnet.

Stromabwärts in Bezug auf die endlose Kaschierbahn 50 ist zu der Infrarot-Trocknungsvorichtung 67 eine Heißluft-Trocknungsvorrichtung 68 der Kaschierbahn-Druckanordnung 54 angeordnet, die der endlosen Kaschierbahn 50 zugeordnet ist und die bereits etwas getrocknete bedruckte endlose Kaschierbahn 50 bzw. deren bereits etwas getrockneten Aufdruck weiter mittels Heißluft trocknet. Die Heißluft-Trocknungsvorrichtung 68 erstreckt sich vertikal und benachbart zu der Inkjet-Druckvorrichtung 62 bzw. der Wärmeschutzanordnung 66. Sie folgt unmittelbar der Infrarot-Trocknungsvorrichtung 67.

Günstigerweise hat die Kaschierbahn-Druckanordnung 54 eine Vielzahl an Umlenkrollen, um die endlose Kaschierbahn 50 zwischen den einzelnen Komponenten der Kaschierbahn-Druckanordnung 54 zu führen.

Stromabwärts zu der Heißluft-Trocknungsvorrichtung 68 hat die Wellpappe-Anlage eine Rückbefeuchtungsvorrichtung 69, die der endlosen Kaschierbahn 50 zugeordnet ist und diese gegenüberliegend zu der Druckseite von unten befeuchtet. Günstigerweise wird dazu eine Glättwalze eingesetzt. Die Rückbefeuchtungsvorrichtung 69 ist einer Führungswalze 70 nachgeordnet, die mit der endlosen Kaschierbahn 50 in Kontakt steht und diese umlenkt.

Die Wellpappe-Anlage umfasst außerdem eine Führungsanordnung 71, die sich unterhalb der Kaschierbahn-Splicevorrichtung 67 und der Kaschierbahn-Druckanordnung 54 horizontal erstreckt. Die Führungsanordnung 71 hat eine erste Führungsvorrichtung 72 zum Führen der einseitig kaschierten ersten Wellpappebahn 5 und eine zweite Führungsvorrichtung 73 zum Führen der einseitig kaschierten zweiten Wellpappebahn 38. Die erste Führungsvorrichtung 72 führt die einseitig kaschierte erste Wellpappebahn 5 oberhalb der einseitig kaschierten zweiten Wellpappebahn 38 und parallel zu dieser in der Führungsanordnung 71. Die einseitig kaschierten Wellpappebahnen 5, 38 werden mittels einer Abwärts-Zuführvorrichtung 74 der Führungsanordnung 71 zugeführt. Die Abwärts-Zuführvorrichtung 74 ist zwischen der Kaschierbahn-Splicevorrichtung 47 und der zweiten Deckbahn-Splicevorrichtung 39 angeordnet.

Die Abwärts-Zuführvorrichtung 74 umfasst/bildet eine zwischen der Kaschierbahn-Splicevorrichtung 47 und der zweiten Deckbahn-Splicevorrichtung 39 angeordnete Ausrichtanordnung mit zwei Ausrichteinrichtungen 96. Jeder einseitig kaschierten Wellpappebahn 5, 38 ist dabei eine eigene Ausrichteinrichtung 96 zugeordnet, die jeweils als Drehrahmen ausgeführt ist und eine obere Walze 97 und untere Walze 98 zur Z-förmigen Umschlingung durch die jeweilige einseitig kaschierte Wellpappebahn 5, 38 umfasst. Die Walzen 97, 98 der jeweiligen Ausrichteinrichtung 96 verlaufen parallel zueinander und vorzugsweise in unterschiedlichen Höhen. Sie sind in dem jeweiligen Drehrahmen gelagert.

In einer unausgelenkten Grundstellung verlaufen die Walzen 97, 98 der jeweiligen Ausrichteinrichtung 96 horizontal und übereinander. Eine seitliche Auslenkung der dort hindurch geführten einseitig kaschierten Wellpappebahn 5, 38 unterbleibt dann.

Die Drehrahmen sind jeweils, beispielsweise durch eine Aktuatoranordnung bzw. einen Antrieb, unabhängig voneinander verschwenkbar, um die einseitig kaschierte Wellpappebahn 5 und/oder 38 seitlich auszulenken. Jeder Drehrahmen ist in seiner Gesamtheit um einen Drehpunkt/Schwenkpunkt drehbar/schwenkbar, der sich zwischen der oberen Walze 97 und der unteren Walze 98 des jeweiligen Drehrahmens befindet. Eine Positionskorrektur der jeweiligen einseitig kaschierten Wellpappebahn 5, 38 ist so ohne Beaufschlagung einer Seite dieser Bahn 5, 38 mit einer zusätzlichen Zugkraft möglich. Die Aktuatoranordnung dreht den zugeordneten Drehrahmen als Ganzes in seiner Vertikalen. In einer ausgelenkten bzw. verdrehten Stellung des Drehrahmens verlaufen dessen Walzen 97, 98 parallel zueinander, aber schräg gegenüber einer Horizontalen bzw. Vertikalen.

Die einseitig kaschierten Wellpappebahnen 5, 38 werden mittels einer Hochführvorrichtung 75 stromabwärts zu der Kaschierbahn-Druckanordnung 54 wieder nach oben geführt. Die Führungsanordnung 71 erstreckt sich bei diesem Ausführungsbeispiel horizontal im Boden 56.

Stromabwärts zu der Rückbefeuchtungsvorrichtung 69 und der Hochführvorrichtung 75 ist ein Leimwerk 76 der Wellpappe-Anlage angeordnet. Das Leimwerk 67 folgt unmittelbar auf die Hochführvorrichtung 75. Ein horizontaler Abstand zwischen der Kaschierbahn-Druckanordnung 54 bzw. der Inkjet-Druckvorrichtung 62 und dem Leimwerk 76 ist äußerst gering, insbesondere kleiner als 5 m. Insbesondere fehlt eine Vorheizanordnung, die ansonsten bekanntlich dem Leimwerk 76 vorgeordnet ist, um die einseitig kaschierten Wellpappebahnen 5, 38 und die endlose Kaschierbahn 50 vor ihrer Verleimung bzw. Verklebung miteinander vorzuheizen. Die endlose Kaschierbahn 50 ist bereits durch die aktive Inkjet-Druckvorrichtung 52 ausreichend erwärmt.

Das Leimwerk 76 hat eine erste Beleimungsvorrichtung 77 mit einer ersten Beleimungswalze 78 und einer ersten Abquetschwalze 79, die an der ersten Beleimungswalze 78 umfangsseitig anliegt. Die erste Beleimungswalze 78 trägt Leim aus einer ersten Leimwanne 80 der ersten Beleimungsvorrichtung 77 von oben auf die nach oben gewandte erste Wellbahn 15 der einseitig kaschierten ersten Wellpappebahn 5 auf. Die erste Wellbahn 15 ist somit dort oberhalb der zugeordneten endlosen ersten Deckbahn 10 angeordnet. Die erste Beleimungsvorrichtung 77 hat ferner eine erste Anpresswalze 81, die unterhalb der ersten Beleimungswalze 78 und der einseitig kaschierten ersten Wellpappebahn 5 angeordnet ist. Die erste Anpresswalze 81 bildet mit der ersten Beleimungswalze 78 einen ersten Anpressspalt/Leimspalt 82 aus, in dem die einseitig kaschierte erste Wellpappebahn 5 mit ihrer ersten Wellbahn 15 gegen die erste Beleimungswalze 78 gepresst wird. In dem Leimwerk 76 sind die erste Beleimungswalze 78 und die erste Abquetschwalze 79 sowie die erste Leimwanne 80 oberhalb der einseitig kaschierten ersten Wellpappebahn 5 angeordnet. Die erste Anpresswalze 81 ist unterhalb der einseitig kaschierten ersten Wellpappebahn 5 angeordnet. Sie lenkt dort die einseitig kaschierte erste Wellpappebahn 5 um.

Unterhalb der ersten Beleimungsvorrichtung 77 hat das Leimwerk 76 eine zweite Beleimungsvorrichtung 83, die wie die erste Beleimungsvorrichtung 77 ausgebildet ist. Die zweite Beleimungsvorrichtung 83 umfasst eine zweite Beleimungswalze 84 und eine zweite Abquetschwalze 85, die an der zweiten Beleimungswalze 84 umfangsseitig anliegt. Die zweite Beleimungswalze 84 trägt Leim aus einer zweiten Leimwanne 86 der zweiten Beleimungsvorrichtung 86 von oben auf die nach oben gewandte zweite Wellbahn der einseitig kaschierten zweiten Wellpappebahn 38 auf. Die zweite Wellbahn ist somit dort oberhalb der zugeordneten endlosen zweiten Deckbahn angeordnet. Die zweite Beleimungsvorrichtung 83 hat ferner eine zweite Anpresswalze 87, die unterhalb der zweiten Beleimungswalze 84 und der einseitig kaschierten zweiten Wellpappebahn 38 angeordnet ist. Die zweite Anpresswalze 87 bildet mit der zweiten Beleimungswalze 84 einen zweiten Anpressspalt/Leimspalt 88 aus, in dem die einseitig kaschierte zweite Wellpappebahn 38 mit ihrer zweiten Wellbahn gegen die zweite Beleimungswalze 84 gepresst wird. In dem Leimwerk 76 sind die zweite Beleimungswalze 84 und die zweite Abquetschwalze 85 sowie die zweite Leimwanne 86 oberhalb der einseitig kaschierten zweiten Wellpappebahn 38 angeordnet. Die zweite Anpresswalze 87 ist unterhalb der einseitig kaschierten zweiten Wellpappebahn 38 angeordnet. Sie lenkt dort die einseitig kaschierte zweite Wellpappebahn um.

Oberhalb der ersten und zweiten Beleimungsvorrichtung 77 bzw. 83 ist die endlose Kaschierbahn 50 durch das Leimwerk 76 geführt. Die endlose Kaschierbahn 50 verläuft somit in dem Leimwerk 76 oberhalb der einseitig kaschierten ersten Wellpappebahn 5 und der einseitig kaschierten zweiten Wellpappebahn 38.

Stromabwärts zu dem Leimwerk 76 hat die Wellpappe-Anlage eine Verpressvorrichtung 89, die einen über obere Führungswalzen geführten endlosen oberen Verpressgurt und einen über untere Führungswalzen geführten unteren Verpressgurt umfasst. Ein Obergurt des unteren Verpressgurts und ein Untergurt des oberen Verpressgurts verlaufen horizontal und parallel und benachbart zueinander. Sie bilden eine Verpressstrecke aus. Durch die Verpressstrecke sind die einseitig kaschierten, beleimten Wellpappebahnen 5, 38 und die endlose Kaschierbahn 50 geführt. Die erste Wellbahn 15 der einseitig kaschierten ersten Wellpappebahn 5 und die zweite Wellbahn der einseitig kaschierten zweiten Wellpappebahn 38 sind jeweils nach oben gerichtet bzw. oben angeordnet. Sie sind jeweils oberhalb der zugehörigen endlosen Deckbahn 10 der jeweiligen einseitig kaschierten Wellpappebahn 5 bzw. 38 angeordnet. Die endlose Kaschierbahn 50 ist in dem Andrückspalt oberhalb der einseitig kaschierten Wellpappebahnen 5, 38 angeordnet. In der Verpressvorrichtung 89 wird die endlose Wellpappebahn 1 unter Abbindung bzw. Aushärtung des Leims gebildet, die zweiseitig kaschiert und insgesamt fünflagig ist.

Stromabwärts zu der Verpressvorrichtung 89 hat die Wellpappe-Anlage eine Kurz-Querschneidevorrichtung 90, die einen Messerzylinder und einen unterhalb derselben angeordneten Gegenzylinder umfasst. Der Messerzylinder und Gegenzylinder sind drehbar bzw. drehantreibbar gelagert. Die Kurz-Querschneidevorrichtung 90 ist imstande, einen Schnitt zu erzeugen, der sich über die volle Breite der endlosen Wellpappebahn 1 erstreckt. Dazu werden Messerzylinder und Gegenzylinder derart in Rotation versetzt, dass sie beim Schneidvorgang miteinander wechselwirken.

Ferner ist die Kurz-Querschneidevorrichtung 90 imstande, einen Schnitt mit einer bestimmten Länge und einem bestimmten Abstand von einem Längsrand der endlosen Wellpappebahn 1 zu erzeugen. Dazu werden Gegenkörper-Elemente des Gegenzylinders entsprechend gewählt bzw. verstellt. Für den Schneidvorgang werden der Messerzylinder und der Gegenzylinder derart in Rotation versetzt, dass ein Messer des Messerzylinders mit den Gegenkörper-Elementen wechselwirkt.

Stromabwärts zu der Kurz-Querschneidevorrichtung 90 hat die Wellpappe-Anlage eine Längsschneide-/Rillvorrichtung 91 mit zwei Rilleinheiten und zwei diesen nachgeordneten Längsschneideeinheiten. Die Längsschneideeinheiten sind imstande, die endlose Wellpappebahn 1 unter Bildung von Teil-Wellpappebahnen in der Förderrichtung 3 zu schneiden. Die Rilleinheiten sind imstande, die endlose Wellpappebahn 1 zu rillen, um ein späteres Falten zu vereinfachen.

Stromabwärts zu der Längsschneide-/Rillvorrichtung 91 ist eine Weiche 92 der Wellpappe-Anlage zum Aufteilen der erzeugten Teil-Wellpappebahnen in zwei unterschiedliche Ebenen vorgesehen.

Stromabwärts zu der Weiche 92 ist eine Querschneidevorrichtung 93 mit zwei übereinander angeordneten Teil-Querschneideeinrichtungen vorgesehen. Jede Teil-Querschneideeinrichtung hat zwei drehantreibbare, übereinander angeordnete, sich senkrecht zu der Förderrichtung 3 erstreckende Querschneidewalzen mit radial nach außen erstreckenden Querschneidemessern zur vollständigen Querdurchtrennung der jeweiligen Teil-Wellpappebahn unter Erzeugung der Wellpappebögen 2.

Stromabwärts zu jeder Teil-Querschneideeinrichtung ist ein Förderband angeordnet, auf dem die außenseitig bedruckten Wellpappebögen 2 zu einer jeweiligen Stapelablage 95 geführt werden.

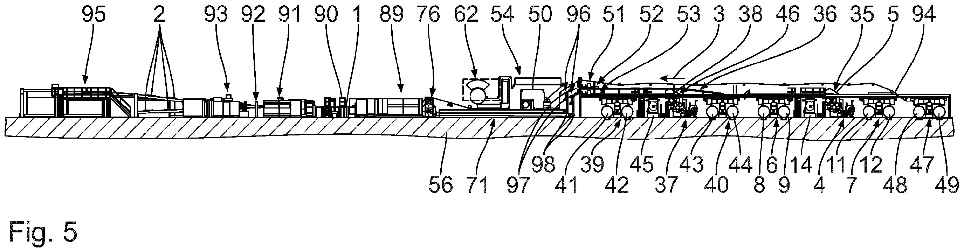

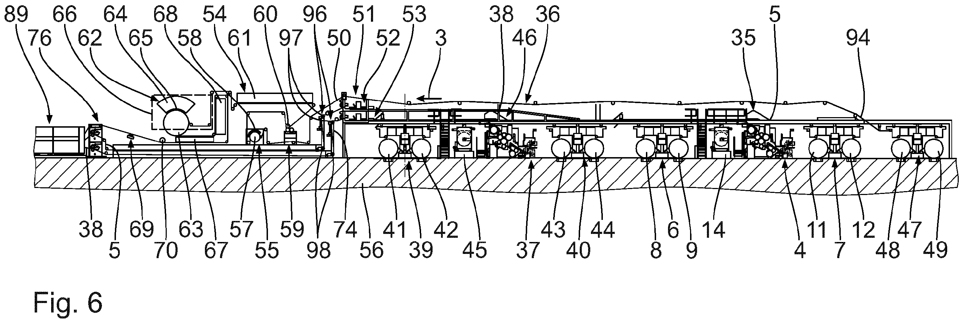

Nachfolgend wird unter Bezugnahme auf die Fig. 5, 6 eine zweite Ausführungsform beschrieben. Im Vergleich mit der ersten Ausführungsform, auf deren Beschreibung hiermit explizit verwiesen wird, ist die Kaschierbahn-Splicevorrichtung 47 ganz am Anfang der Wellpappe-Anlage benachbart zu der ersten Materialbahn-Splicevorrichtung 7 angeordnet. Die durch die Kaschierbahn-Splicevorrichtung 47 erzeugte endlose Kaschierbahn 50 wird über eine Kaschierbahn-Hochtransporteinrichtung 94 der Brücke 36 zugeführt. Die endlose Kaschierbahn 50 wird auf der Brücke 36 oberhalb der einseitig kaschierten Wellpappebahnen 5, 38 geführt. Sie verläuft dort oberhalb der ersten Materialbahn-Splicevorrichtung 7, der ersten Vorrichtung 4 zum Herstellen einer einseitig kaschierten ersten Wellpappebahn 5, der ersten Deckbahn-Splicevorrichtung 6, der zweiten Materialbahn-Splicevorrichtung 40, der zweiten Vorrichtung 37 zum Herstellen einer einseitig kaschierten zweiten Wellpappebahn 38 und der zweiten Deckbahn-Splicevorrichtung 39 sowie der Bremsanordnung 51. Sie tritt dann stromabwärts zu der Bremsanordnung 51 in die Kaschierbahn-Druckanordnung 54 ein.

Die einseitig kaschierten Wellpappebahnen 5, 38 werden der Führungsanordnung 71 über die Abwärts-Zuführvorrichtung 74 zugeführt, die sich stromaufwärts zu der Kaschierbahn-Druckanordnung 54 und stromabwärts zu der Bremsanordnung 51 befindet. Die Abwärts-Zuführvorrichtung 74 umfasst/bildet eine Ausrichtanordnung mit zwei Ausrichteinrichtungen 96 entsprechend der vorherigen Ausführungsform.

Die Führungsanordnung 71 ist oberhalb des Bodens 56 angeordnet. Sie erstreckt sich horizontal und benachbart zu diesem. Die endlose Kaschierbahn 50 befindet sich in dem Leimwerk 76 und der Verpressvorrichtung 89 wieder oberhalb der einseitig kaschierten Wellpappebahnen 5, 38.

Gemäß einer alternativen Ausführungsform hat die Wellpappe-Anlage genau eine Vorrichtung zum Herstellen einer einseitig kaschierten Wellpappebahn. Es wird so in der Wellpappe-Anlage eine Wellpappebahn erzeugt, die dreilagig ist.

## Patentansprüche

1. Wellpappe-Anlage zum Herstellen von Wellpappe, umfassend
a) mindestens eine eine jeweilige Riffeleinrichtung (16, 17) aufweisende Vorrichtung (4, 37) zum Herstellen einer jeweiligen einseitig kaschierten Wellpappebahn (5, 38) aus einer jeweiligen Deckbahn (10) und Materialbahn (13),
b) eine Kaschierbahn-Abgabevorrichtung (47) zur Abgabe einer Kaschierbahn (50),
c) eine der Kaschierbahn-Abgabevorrichtung (47) nachgeordnete Kaschierbahn-Druckanordnung (54) mit mindestens einer Kaschierbahn-Druckvorrichtung (62) zum Bedrucken der Kaschierbahn (50),
d) eine der Kaschierbahn-Druckanordnung (54) nachgeordnete Vorrichtung (89) zum Herstellen einer zweiseitig kaschierten Wellpappebahn (1) aus der mindestens einen einseitig kaschierten Wellpappebahn (5, 38) und der Kaschierbahn (50), und
e) mindestens eine der mindestens einen Riffeleinrichtung (16, 17) nachgeordnete Umlenkanordnung zum Umlenken der mindestens einen einseitig kaschierten Wellpappebahn (5, 38) in Richtung auf die Vorrichtung (89) zum Herstellen einer zweiseitig kaschierten Wellpappebahn (1),
f) wobei die mindestens eine Vorrichtung (4, 37) zum Herstellen einer jeweiligen einseitig kaschierten Wellpappebahn (5, 38) mindestens eine Leimauftragseinrichtung (19) zum Auftragen von Leim auf die jeweilige geriffelte Materialbahn (13) umfasst,
g) wobei die mindestens eine Vorrichtung (4, 37) zum Herstellen einer jeweiligen einseitig kaschierten Wellpappebahn (5, 38) eine jeweilige Anpresseinrichtung (24) zum Anpressen der jeweiligen Deckbahn (10) gegen die jeweilige beleimte geriffelte Materialbahn (13) aufweist,
h) wobei die mindestens eine Vorrichtung (4, 37) zum Herstellen einer jeweiligen einseitig kaschierten Wellpappebahn (5, 38) derart ausgebildet und/oder angeordnet ist, dass die mindestens eine einseitig kaschierte Wellpappebahn (5, 38) zumindest benachbart stromaufwärts zu der Vorrichtung (89) zum Herstellen einer zweiseitig kaschierten Wellpappebahn (1) eine jeweilige nach oben gerichtete Wellung aufweist,
i) wobei die Kaschierbahn (50) derart in die Vorrichtung (89) zum Herstellen einer zweiseitig kaschierten Wellpappebahn (1) geführt ist, dass sie dort oberhalb der mindestens einen einseitig kaschierten Wellpappebahn (5, 38) verläuft,
**dadurch gekennzeichnet, dass**
j) ein Anpresseingang (33) der jeweiligen Anpresseinrichtung (24) der Vorrichtung (89) zum Herstellen einer zweiseitig kaschierten Wellpappebahn (1) zugewandt ist.

2. Wellpappe-Anlage nach Anspruch 1, **dadurch gekennzeichnet, dass** die mindestens eine Leimauftragseinrichtung (19) an einer der Vorrichtung (89) zum Herstellen einer zweiseitig kaschierten Wellpappebahn (1) zugewandten Seite der jeweiligen Riffeleinrichtung (16, 17) angeordnet ist.

3. Wellpappe-Anlage nach Anspruch 1 oder 2, **gekennzeichnet durch** ein Leimwerk (76), das der Vorrichtung (89) zum Herstellen einer zweiseitig kaschierten Wellpappebahn (1) vorgeordnet und derart ausgebildet ist, dass dieses Leim von oben auf die mindestens eine einseitig kaschierte Wellpappebahn (5, 38) aufträgt.

4. Wellpappe-Anlage nach Anspruch 3, **dadurch gekennzeichnet, dass** das Leimwerk (76) mindestens eine Beleimungswalze (78, 84) zum Beleimen der jeweiligen einseitig kaschierten Wellpappebahn (5, 38) aufweist, wobei die mindestens eine Beleimungswalze (78, 84) mindestens einen Anpressspalt (82, 88) zum Hindurchführen der jeweiligen einseitig kaschierten Wellpappebahn (5, 38) nach oben begrenzt.

5. Wellpappe-Anlage nach einem der vorherigen Ansprüche, **gekennzeichnet durch** eine Führungsanordnung (71) zum Führen der mindestens einen einseitig kaschierten Wellpappebahn (5, 38) unterhalb der Kaschierbahn-Druckanordnung (54).

6. Wellpappe-Anlage nach einem der vorherigen Ansprüche, **dadurch gekennzeichnet, dass** die Kaschierbahn-Abgabevorrichtung (47) benachbart zu der Kaschierbahn-Druckanordnung (54) angeordnet ist.

7. Wellpappe-Anordnung nach einem der Ansprüche 1 bis 5, **dadurch gekennzeichnet, dass** die Kaschierbahn-Abgabevorrichtung (47) in einem stromaufwärtigen Endbereich der Wellpappe-Anlage angeordnet ist.

## Claims

1. Corrugated cardboard plant for producing corrugated cardboard, comprising
a) at least one device (4, 37), having a respective corrugating installation (16, 17), for producing a respective corrugated cardboard web (5, 38) laminated on one side from a respective cover web (10) and a respective material web (13);
b) a lamination web dispensing device (47) for dispensing a lamination web (50);
c) a lamination web printing assembly (54), disposed downstream of the lamination web dispensing device (47), having at least one lamination web printing device (62) for imprinting the lamination web (50);
d) a device (89), disposed downstream of the lamination web printing assembly (54), for producing a corrugated cardboard web (1) laminated on two sides from the at least one corrugated cardboard web (5, 38) laminated on one side and the lamination web (50); and
e) at least one deflection assembly, disposed downstream of the at least one corrugating installation (16, 17), for deflecting the at least one corrugated cardboard web (5, 38) laminated on one side in a direction towards the device (89) for producing a corrugated cardboard web (1) laminated on two sides;
f) wherein the at least one device (4, 37) for producing a respective corrugated cardboard web (5, 38) laminated on one side comprises at least one glue application installation (19) for applying glue to the respective corrugated material web (13);
g) wherein the at least one device (4, 37) for producing a respective corrugated cardboard web (5, 38) laminated on one side has a respective pressure installation (24) for pressing the respective cover web (10) against the respective glued corrugated material web (13),
h) wherein the at least one device (4, 37) for producing a respective corrugated cardboard web (5, 38) laminated on one side is configured and/or disposed in such a manner that the at least one corrugated cardboard web (5, 38) laminated on one side, at least in a manner adjacent upstream of the device (89) for producing a corrugated cardboard web (1) laminated on both sides, has a respective upwardly directed corrugation;
i) wherein the lamination web (50) into the device (89) for producing a corrugated cardboard web (1) laminated on two sides is guided in such a manner that said lamination web (50) therein runs above the at least one corrugated cardboard web (5, 38) laminated on one side,
**characterized in that**
j) a contact pressure entry (33) of the respective pressure installation (24) faces the device (89) for producing a corrugated cardboard web (1) laminated on two sides.

2. Corrugated cardboard plant according to Claim 1, **characterized in that** the at least one glue application installation (19) is preferably disposed on a side of the respective corrugating installation (16, 17) that faces the device (89) for producing a corrugated cardboard web (1) laminated on two sides.

3. Corrugated cardboard plant according to Claim 1 or 2, **characterized by** a gluing unit (76) which is disposed upstream of the device (89) for producing a corrugated cardboard web (1) laminated on two sides and is configured in such a manner that said gluing unit (76) applies glue from above to the at least one corrugated cardboard web (5, 38) laminated on one side.

4. Corrugated cardboard plant according to Claim 3, **characterized in that** the gluing unit (76) has at least one gluing roller (78, 84) for gluing the respective corrugated cardboard web (5, 38) laminated on one side, wherein the at least one gluing roller (78, 84) upwardly delimits at least one pressure gap (82, 88) for guiding through the respective corrugated cardboard web (5, 38) laminated on one side.

5. Corrugated cardboard plant according to one of the preceding Claims, **characterized by** a guide assembly (71) for guiding the at least one corrugated cardboard web (5, 38) laminated on one side below the lamination web printing assembly (54).

6. Corrugated cardboard plant according to one of the preceding claims, **characterized in that** the lamination web dispensing device (47) is disposed so as to be adjacent to the lamination web printing assembly (54).

7. Corrugated cardboard plant according to one of Claims 1 to 5, **characterized in that** the lamination web dispensing device (47) is disposed in an upstream end region of the corrugated cardboard plant.

## Revendications

1. Installation de carton ondulé pour la fabrication de carton ondulé, comprenant
a) au moins un dispositif (4 ; 37) présentant un dispositif d'ondulation (16, 17) respectif pour la fabrication d'une bande de carton ondulé (5, 38) contrecollée d'un côté respective à partir d'une bande de recouvrement (10) et d'une bande de matériau (13) respectives,
b) un dispositif de sortie de bande contrecollée (47) pour la sortie d'une bande contrecollée (50),
c) un agencement d'impression de bande contrecollée (54) agencé en aval du dispositif de sortie de bande contrecollée (47) avec au moins un dispositif d'impression de bande contrecollée (62) pour l'impression de la bande contrecollée (50),
d) un dispositif (89) agencé en aval de l'agencement d'impression de bande contrecollée (54) pour la fabrication d'une bande de carton ondulé (1) contrecollée des deux côtés à partir de l'au moins une bande de carton ondulé (5, 38) contrecollée d'un côté et de la bande contrecollée (50), et
e) au moins un agencement de déviation agencé en aval de l'au moins un dispositif d'ondulation (16, 17) pour la déviation d'au moins une bande de carton ondulé contrecollée d'un côté (5, 38) en direction du dispositif (89) pour la fabrication d'une bande de carton ondulé (1) contrecollée des deux côtés,
f) dans laquelle l'au moins un dispositif (4, 37) comporte pour la fabrication d'une bande de carton ondulé (5, 38) contrecollée d'un côté respective au moins un dispositif d'application de colle (19) pour l'application de colle sur la bande de matériau (13) ondulée respective,
g) dans laquelle l'au moins un dispositif (4, 37) présente pour la fabrication d'une bande de carton ondulé (5, 38) contrecollée d'un côté respective un dispositif de pressage (24) respectif pour le pressage de la bande de recouvrement (10) respective contre la bande de matériau (13) ondulée collée respective,
h) dans laquelle l'au moins un dispositif (4, 37) est réalisé et/ou agencé pour la fabrication d'une bande de carton ondulée (5, 38) contrecollée d'un côté respective de telle manière que l'au moins une bande de carton ondulé (5, 38) contrecollée d'un côté présente au moins de manière contiguë en amont du dispositif (89) pour la fabrication d'une bande de carton ondulé (1) contrecollée des deux côtés une ondulation dirigée vers le haut respective,
i) dans laquelle la bande contrecollée (50) est guidée dans le dispositif (89) pour la fabrication d'une bande de carton ondulé (1) contrecollée des deux côtés de telle manière qu'elle s'y étende au-dessus de l'au moins une bande de carton ondulée (5, 38) contrecollée d'un côté,
**caractérisée en ce que**
j) une entrée de pressage (33) du dispositif de pressage (24) respectif est tournée vers le dispositif (89) pour la fabrication d'une bande de carton ondulé (1) contrecollée des deux côtés.

2. Installation de carton ondulée selon la revendication 1, **caractérisée en ce que** l'au moins un dispositif d'application de colle (19) est agencé au niveau d'un côté tourné vers le dispositif (89) pour la fabrication d'une bande de carton ondulé (1) contrecollée des deux côtés du dispositif d'ondulation (16, 17) respectif.

3. Installation de carton ondulée selon la revendication 1 ou 2, **caractérisée par** un dispositif d'encollage (76) qui est agencé en amont du dispositif (89) pour la fabrication d'une bande de carton ondulé (1) contrecollée des deux côtés et réalisé de telle manière que cette colle s'applique de dessus sur l'au moins une bande de carton ondulé (5, 38) contrecollée d'un côté.

4. Installation de carton ondulée selon la revendication 3, **caractérisée en ce que** le dispositif d'encollage (76) présente au moins un rouleau de collage (78, 84) pour le collage de la bande de carton ondulé (5, 38) contrecollée d'un côté respective, dans laquelle l'au moins un rouleau de collage (78, 84) délimite vers le haut au moins une fente de pressage (82, 88) pour le passage de la bande de carton ondulé (5, 38) contrecollée d'un côté respective.

5. Installation de carton ondulée selon l'une des revendications précédentes, **caractérisée par** un agencement de guidage (71) pour le guidage d'au moins une bande de carton ondulé (5, 38) contrecollée d'un côté en dessous de l'agencement d'impression de bande contrecollée (54).

6. Installation de carton ondulée selon l'une des revendications précédentes, **caractérisée en ce que** le dispositif de sortie de bande contrecollée (47) est agencé de manière contiguë à l'agencement d'impression de bande contrecollée (54).

7. Installation de carton ondulée selon l'une des revendications 1 à 5, **caractérisée en ce que** le dispositif de sortie de bande contrecollée (47) est agencé dans une zone d'extrémité en amont de l'installation de carton ondulé.
